# EUROPÄISCHE PATENTANMELDUNG

(11) **EP 4 386 331 A1**
(43) Veröffentlichungstag der Anmeldung: **19.06.2024**
(21) Anmeldenummer: 22213006.4
(22) Anmeldetag: 13.12.2022
(51) Int. Cl.: G01F 1/34, G01F 1/40, E03B 9/02

(54) **MESSEINRICHTUNG ZUR ERMITTLUNG DES AUS EINEM HYDRANTEN AUSFLIESSENDEN WASSERVOLUMENS**

(71) Anmelder: Hinni AG, 4105 Biel-Benken (CH)
(72) Erfinder: Jermann, Dieter, 4242 Laufen (CH)
(74) Vertreter: Ullrich, Gerhard

(57) **Zusammenfassung**

Die Messeinrichtung **(3)** ist zur Ermittlung des aus einem Hydranten **(9)** ausfliessenden Wasservolumens **(V)** konzipiert, wobei der Hydrant **(9)** an ein unter Druck stehendes Leitungsnetz angeschlossen ist. Die Messeinrichtung **(3)** ist fest im Hydranten **(9)** installiert und hat einen Strömungskörper **(30),** an dem zwei zueinander beabstandete Druckmessstellen **(31,32)** vorhanden sind, deren erfasste Werte zur Beaufschlagung eines Differenzdruckmessmoduls **(34)** bestimmt sind. Der vom Differenzdruckmessmodul **(34)** zum Zeitpunkt (**t₁**) erfasste Differenzdruck (Δ**p**) bildet ein Mass für den zu diesem Zeitpunkt (**t₁**) aus dem Hydranten **(9)** ausfliessenden Volumenstrom **(Q).** Die vom Differenzdruckmessmodul **(34)** über die Zeitspanne **(t)** inkremental laufend erfassten Differenzdrücke (Δ**p**) werden an einen Rechner übermittelt, mit dem das während der Zeitspanne **(t)** aus dem Hydranten **(9)** ausfliessende Wasservolumen **(V)** berechnet und protokolliert wird.

## Beschreibung

### Anwendungsgebiet der Erfindung

Die Erfindung betrifft eine Messeinrichtung zur Ermittlung des aus einem Hydranten während einer Zeitspanne ausfliessenden Wasservolumens, so dass die Bezugsmenge auch für die Verrechnung zwischen dem Wasserversorger und dem Verbraucher herangezogen werden kann.

### Stand der Technik

Die CN 214 748 206 U offenbart eine Anordnung zur Ermittlung des aus einem Feuerhydranten ausströmenden Wasservolumens. Hierzu sind eine Druckmessvorrichtung und eine Messvorrichtung zur Erfassung des Betrags der momentanen Ventilöffnung vorgesehen, wobei aus beiden Messwerten in einem Steuerkreis der aus dem Hydranten fliessende Volumenstrom, z.B. in Litern pro Minute (l/min), berechnet wird.

Zur Hydranten-Leistungsmessung sind ferner verschiedene Geräte auf dem Markt, z.B. von der Rittmeyer AG, CH-6341 Baar / Schweiz (siehe: https://rittmeyer.com) oder der Hydranten-Tester SOTRONIX (siehe: www.sotronix.de). Mit diesen Geräten lässt sich ermitteln, ob im Ernstfall genügend Druck auf der Leitung zur Löschwasserversorgung ansteht; man kann den Ruhedruck, Fliessdruck, Fliessgeschwindigkeit und -volumen bestimmen.

### Aufgabe der Erfindung

Über die Funktion der insoweit bekannten Geräte in Verbindung mit Hydranten hinaus, liegt der Erfindung die Aufgabe zugrunde, eine Messeinrichtung vorzuschlagen, mittels der das vom Hydranten während einer Zeitspanne bezogene Volumen in Litern oder m³ messbar ist. Die Bezugsmenge bildet u.a. die Grundlage für die Verrechnung zwischen dem Wasserversorger und dem Verbraucher. Die Messeinrichtung soll gerätetechnisch zuverlässig und möglichst unaufwändig sein, sich an Überflur- und Unterflurhydranten fest installieren lassen und an bestehenden Hydranten nachrüstbar sein. Für die Erfassung und Verarbeitung der Messwerte wird eine volle Automatisierung angestrebt.

### Übersicht über die Erfindung

Die vorgeschlagene Messeinrichtung dient zur Ermittlung des während einer Zeitspanne aus einem Hydranten ausfliessenden Wasservolumens, so dass die Bezugsmenge u.a. für die Verrechnung zwischen dem Wasserversorger und dem Verbraucher herangezogen werden kann. Der Hydrant ist an ein unter Druck stehendes Leitungsnetz angeschlossen. Die Messeinrichtung ist fest im Hydranten installiert und hat einen Strömungskörper, an dem zwei zueinander beabstandete Druckmessstellen vorhanden sind, deren erfasste Werte zur Beaufschlagung eines Differenzdruckmessmoduls bestimmt sind. Der vom Differenzdruckmessmodul zum Zeitpunkt **t₁** erfasste Differenzdruck bildet ein Mass für den zu diesem Zeitpunkt **t₁** aus dem Hydranten ausfliessenden Volumenstrom. Die vom Differenzdruckmessmodul über die Zeitspanne **t** inkremental laufend erfassten Differenzdrücke werden als Signalfluss an einen Rechner übermittelt, mit dem das während der Zeitspanne **t** aus dem Hydranten ausfliessende Wasservolumen berechnet und protokolliert wird.

Nachstehend sind besonders vorteilhafte Details zur erfindungsgemässen Messeinrichtung genannt: Der Signalfluss kann alternativ in einem Speicherbaustein als Bestandteil der Messeinrichtung erfasst werden und lässt sich dann dort über eine Kabelverbindung oder berührungslos vom Rechner als Messergebnis für das aus dem Hydranten entnommene Wasservolumen auslesen.

Der Strömungskörper ragt in den Strömungsquerschnitt im Inneren des Hydranten hinein und ist von hydrodynamischer Form, welche im Prinzip das Querschnittsprofil einer Flugzeugtragfläche hat und mit seiner Profilnase entgegen der im Hydranten im Betriebsmodus auftretenden Wasserströmung positioniert ist, während die Profilhinterkante des Strömungskörpers stromabwärts liegt. Jeweils eine der Druckmessstellen befindet sich am Strömungskörper auf dessen Oberseite und dessen Unterseite, nämlich vorzugsweise jeweils nahe der Profilnase des Strömungskörpers. Zur Definition an Flugzeugtragflächen, siehe https://de.wikipedia.org/wiki/Profil_(Strömungslehre).

Die Messeinrichtung weist einen Zwischenring auf, und der Strömungskörper ragt in die lichte Weite des Zwischenrings hinein.

Peripher am Zwischenring ist ein Gehäuse angeordnet, welches seitlich am Hydranten herausragt. Axial am Strömungskörper setzt ein Transferstück an. Der Übergang vom Strömungskörper zum Transferstück steckt in einer als Durchgangsöffnung im Zwischenring ausgebildeten Aufnahme, während der übrige Teil des Transferstücks in einem im Gehäuse vorhandenen Lager ruht. Die an den Druckmessstellen erfassten Werte werden durch das Transferstück an das Differenzdruckmessmodul geleitet.

Die Energieversorgung der Messeinrichtung basiert auf elektrischem Strom, entweder über ein Kabel vom Stromnetz oder von einer Batterie.

Die vom Differenzdruckmessmodul über die Zeitspanne inkremental laufend erfassten Differenzdrücke werden als äquivalenter elektrischer Signalfluss entweder direkt über ein Kabel an die Rechnereinheit übermittelt; oder das Kabel führt zu einem Funkmodul, welches den Signalfluss an die Rechnereinheit transferiert.

Die Batterie kann vorteilhaft auswechselbar im Gehäuse untergebracht sein.

Bei einem Hydranten in Gestalt eines Überflurhydranten ist der Zwischenring mit dem darin positionierten Strömungskörper zwischen einem Steigrohr und einem Oberteil installiert. Ist der Überflurhydrant höhenverstellbar, wird der Zwischenring zwischen einer in einem Steigrohrmantel teleskopisch höhenverstellbar steckenden Steigrohrverlängerung und einem Oberteil eingebaut.

Hat der Hydrant die Gestalt eines Unterflurhydranten, ist der Zwischenring mit dem darin positionierten Strömungskörper zwischen einem Steigrohr und einem Unterflur-Aufsatz fest eingesetzt. Bei einem höhenverstellbaren Unterflurhydranten ergibt sich die Position des Zwischenrings zwischen einer in einem Steigrohrmantel teleskopisch höhenverstellbar steckenden Steigrohrverlängerung und einem Unterflur-Aufsatz.

Wenn während der Zeitspanne ein Unterbruch der Wasserentnahme erfolgt, startet der Rechner eine neue Zeitspanne der Datenerfassung. Am Rechner ist das aus dem Hydranten ausfliessende Wasservolumen für die einzelnen Zeitspannen und/oder auch für einen Zeitraum, z.B. per Tag, zusammengefasst, ablesbar.

Als Option ist am Rechner einstellbar, dass ein kurzzeitiger Unterbruch der Wasserentnahme am Hydranten, z.B. bis zu 3min, für die Datenerfassung keine neue Zeitspanne startet, sondern das nun zusätzlich aus dem Hydranten ausfliessende Wasservolumen auf die laufende Zeitspanne aufsummiert wird.

### Kurzbeschreibung der beigefügten Zeichnungen

Es zeigen:

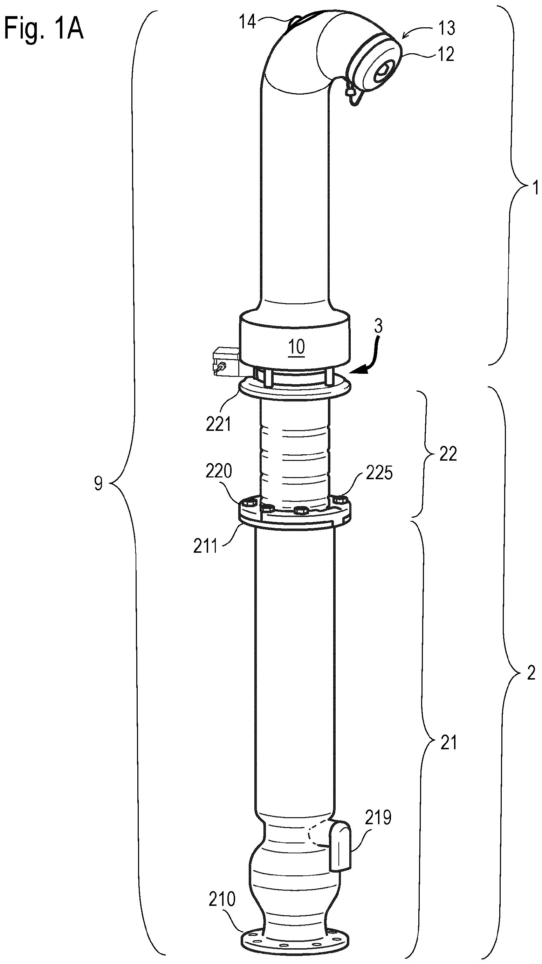

- Figur 1A -: einen kompletten Überflurhydranten;

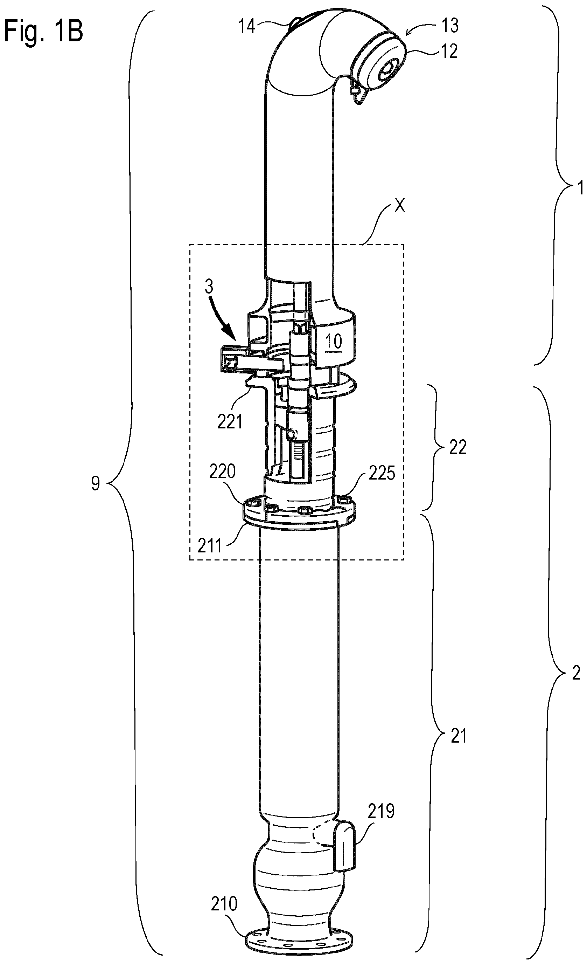

- Figur 1B -: den Aufbau gemäss Figur 1A, mit einem Teilschnitt;
- Figur 2A -: das vergrösserte Detail X aus Figur 1B;
- Figur 2B -: den Aufbau gemäss Figur 2A, in partieller Explosivdarstellung;

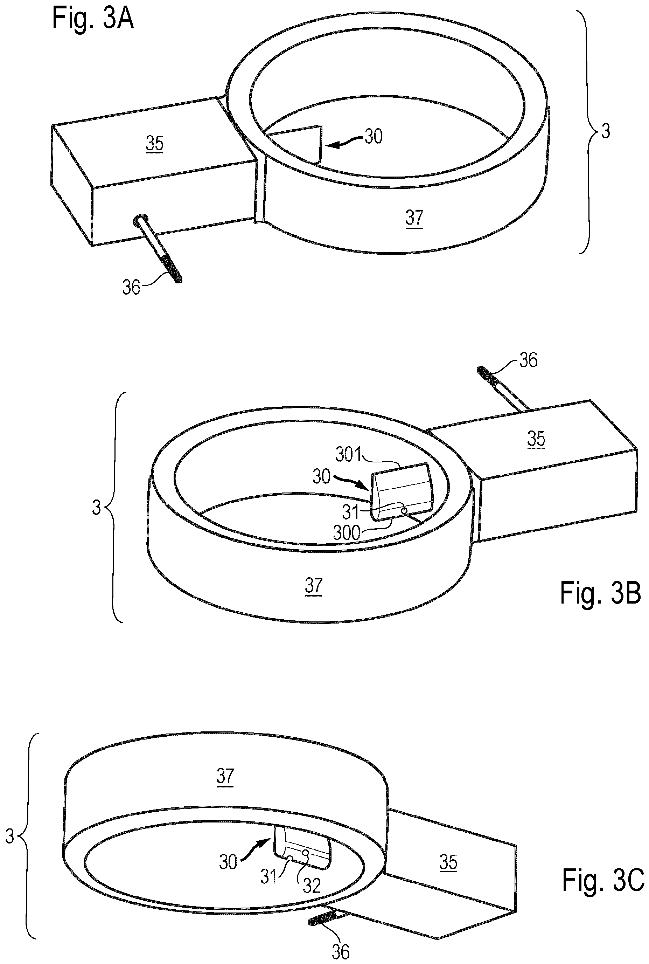

- Figur 3A -: eine komplette Messeinrichtung aus Figur 1A, in Perspektivansicht;
- Figur 3B -: die Messeinrichtung gemäss Figur 3A, in anderer Perspektivansicht;
- Figur 3C -: die Messeinrichtung gemäss Figuren 3A und 3B, in erneut geänderter Perspektivansicht;

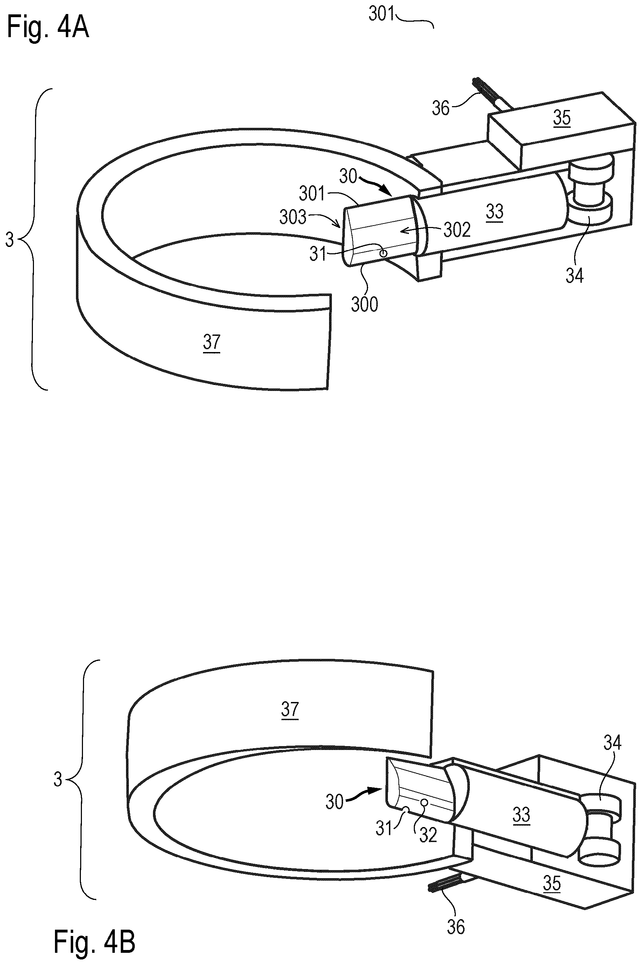

- Figur 4A -: die Messeinrichtung gemäss Figuren 3A bis 3C, in perspektivischem Teilschnitt;
- Figur 4B -: die Anordnung gemäss Figur 4A, in anderem perspektivischem Teilschnitt;

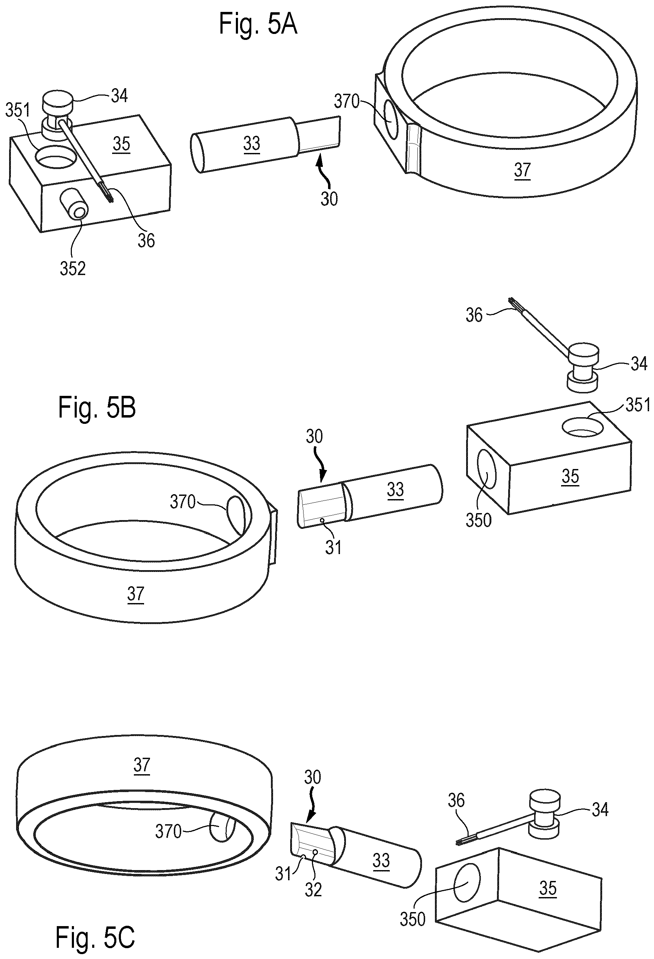

- Figur 5A -: die Messeinrichtung gemäss Figur 3A, in perspektivischer Explosivdarstellung;
- Figur 5B -: die Anordnung gemäss Figur 5A, in anderer perspektivischer Explosivdarstellung; und
- Figur 5C -: die Anordnung gemäss Figuren 5A und 5B, in erneut geänderter perspektivischer Explosivdarstellung.

### Ausführungsbeispiel

Mit Bezug auf die beiliegenden Zeichnungen erfolgt nachstehend die detaillierte Beschreibung eines Ausführungsbeispiels der geschaffenen erfindungsgemässen Messeinrichtung.

Für die gesamte weitere Beschreibung gilt folgende Festlegung: Sind in einer Figur zum Zweck zeichnerischer Eindeutigkeit Bezugsziffern enthalten, aber im unmittelbar zugehörigen Beschreibungstext nicht erläutert, so wird auf deren Erwähnung in vorangehenden oder nachfolgenden Figurenbeschreibungen Bezug genommen. Im Interesse der Übersichtlichkeit wird auf die wiederholte Bezeichnung von Bauteilen in weiteren Figuren zumeist verzichtet, sofern zeichnerisch eindeutig erkennbar ist, dass es sich um "wiederkehrende" Bauteile handelt.

### Figuren 1A und 1B

Dieses Figurenpaar illustriert den prinzipiellen Aufbau eines kompletten Überflurhydranten **9**. Das Unterteil **2** ist zumeist in Verbindung mit einem hier nicht gezeigten Einlaufbogen zum Anschluss an das Wasserleitungsnetz bestimmt. Das Unterteil **2** ist vorteilhaft zweiteilig ausgebildet und setzt sich aus dem Steigrohrmantel **21** und der darin steckenden teleskopisch höheneinstellbaren Steigrohrverlängerung **22** zusammen. Zur Verschraubung mit dem Einlaufbogen dient der untere Flansch **210** am Steigrohrmantel **21**, das im unteren Bereich ferner den Entwässerungsbogen **219** aufweist. Die Fixierung der im Erdreich an die Einbautiefe angepassten Auszugshöhe der Steigrohrverlängerung **22** geschieht mittels des oberen Flansches **211** am Steigrohrmantel **21** zusammen mit dem aufgesetzten Spannflansch **220** und der Verschraubung **225**.

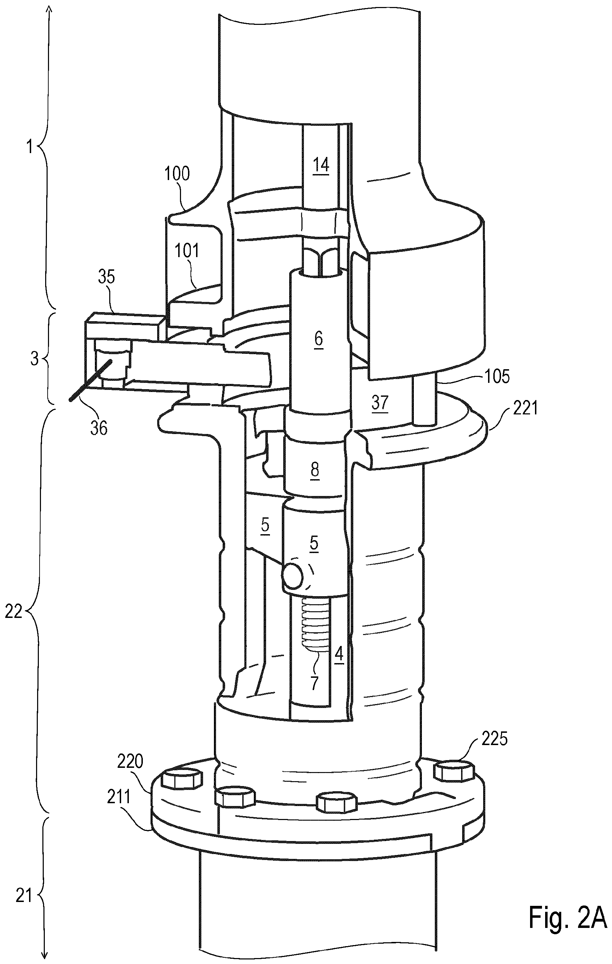

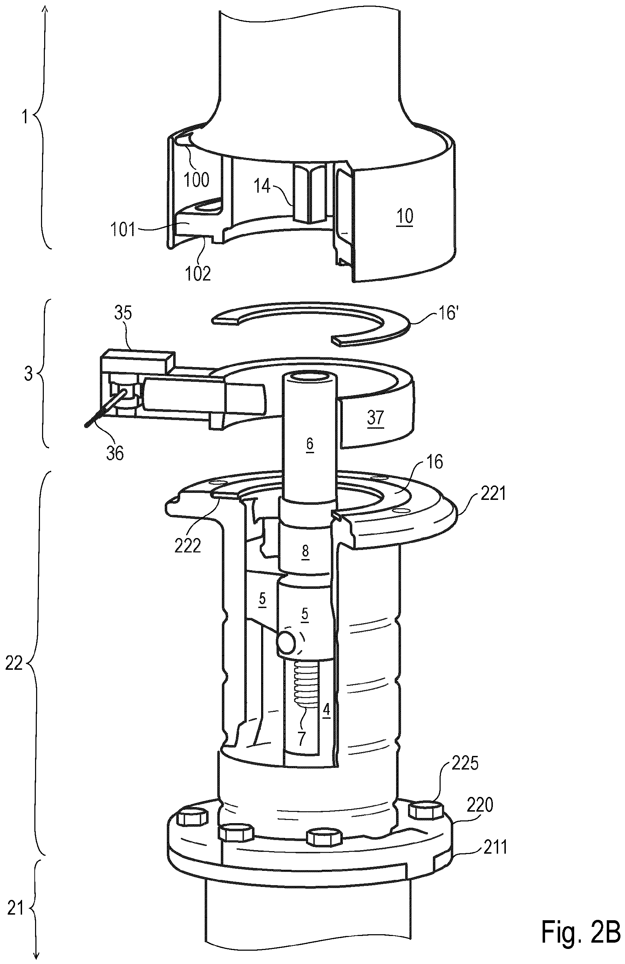

Oben auf der Steigrohrverlängerung **22** ist die Messeinrichtung **3** montiert, welche einerseits am oberen Flansch **221** der Steigrohrverlängerung **22** mittels der Verschraubung **105** befestigt ist. Andererseits greift die Verschraubung **105** in den Basisflansch **101** (siehe Figuren 2A, 2B) des somit auf der Messeinrichtung **3** aufsitzenden Oberteils **1** ein. Am Kopf des Oberteils **1** ragt die Spindelverlängerung **14** heraus, so dass sich ein Werkzeug zur Betätigung des Hydranten **9** ansetzen lässt. Der Fuss des Oberteils **1** ist vom Fundamentring **10** umgeben, und am oberen Ende des Oberteils **1** befindet sich der Schlauchanschluss **13,** der von der Verschlusskappe **12** abgedeckt ist.

### Figuren 2A und 2B

Dieses Figurenpaar erlaubt eine Teilansicht in das Innere des Hydranten **9,** im Bereich von der Steigrohrverlängerung **22** bis zum Fuss des Oberteils 1. Aufwärts betrachtet sieht man das obere Ende der Ventilstange **4,** die nach unten zum Hauptventil (nicht sichtbar) führt und oben mit der Spindelmutter **5** verbunden ist, in welche die Spindel **7** eingreift. Die Spindel **7** führt axial in das innerlich der Steigrohrverlängerung **22** verriegelbare Spindellager **8**, auf dem der Spindelaufsatz **6** ruht. Von oben in den Spindelaufsatz **6** ist formschlüssig die Spindelverlängerung **14** eingeführt, bei deren Drehung Spindelaufsatz **6** und Spindel **7** mitgenommen werden und dadurch mit der Vertikalverstellung der Ventilstange **4** das Hauptventil betätigt wird. Von der zwischen Steigrohrverlängerung **22** und Oberteil **1** angeordneten Messeinrichtung **3** sind der Zwischenring **37** und das radial herausragende Gehäuse **35** sichtbar, aus dem sich ein Kabel **36** erstreckt, über welches die Stromversorgung der Messeinrichtung **3** und die Signalleitung erfolgen. Die Oberseite des oberen Flansches **221** hat eine Ringnut **222,** in welcher ein unterer Dichtungsring **16** sitzt, und in der Unterseite des Basisflansches **101** befindet sich die Ringnut **102** zur Aufnahme des oberen Dichtungsrings **16'**. Die beiden Dichtungsringe **16,16'** bewirken die abgedichtete Positionierung des Zwischenrings **37** zwischen Steigrohrverlängerung **22** und Oberteil **1**.

### Figuren 3A bis 5C

Von dem zum Einbau zwischen der Steigrohrverlängerung **22** und dem Oberteil **1** bestimmten Zwischenring **37** ragt der Strömungskörper **30** in die lichte Weite des Zwischenrings **37** hinein, so dass der Strömungskörper **30** im Strömungsquerschnitt im Inneren des Hydranten **9** positioniert ist. Peripher am Zwischenring **37** ist das Gehäuse **35** angeordnet, welches somit seitlich am Hydranten **9** herausragt. Der Strömungskörper **30** ist von hydrodynamischer Form, welche im Prinzip das Querschnittsprofil einer Flugzeugtragfläche hat und mit seiner Profilnase **300** entgegen der im Hydranten **9** im Betriebsmodus auftretenden Wasserströmung positioniert ist, während die Profilhinterkante **301** des Strömungskörpers **30** stromabwärts liegt. Am Strömungskörper **30** ist auf dessen Oberseite **302** und dessen Unterseite **303**, jeweils nahe der Profilnase **300**, eine Druckmessstelle **31,32** vorhanden, mit deren erfassten Werten ein Differenzdruckmessmodul **34** beaufschlagt wird.

Axial an den Strömungskörper **30** setzt ein zylindrisches Transferstück **33** an, deren Übergang zum Strömungskörper **30** in einer als Durchgangsöffnung im Zwischenring **37** ausgebildeten Aufnahme **370** steckt, während der übrige Teil des Transferstücks **33** in einem im Gehäuse **35** vorhandenen Lager **350** ruht. Die an den Druckmessstellen **31**,**32** erfassten Drücke werden durch das Transferstück **33** in das Differenzdruckmessmodul **34** geleitet, welches im einem Nest **351** des Gehäuses **35** sitzt. Vom Differenzdruckmessmodul **34** erstreckt sich ein Kabel **36** durch eine am Gehäuse **35** eingesetzte Kabelmuffe **352** nach aussen. Über das Kabel **36** wird die Messeinrichtung **3** mit Strom versorgt. Der vom Differenzdruckmessmodul **34** zum Zeitpunkt **t₁** erfasste Differenzdruck Δ**p** bildet ein Mass für den zu diesem Zeitpunkt **t₁** aus dem Hydranten **9** ausfliessenden Volumenstrom **Q**. Die vom Differenzdruckmessmodul **34** über die Zeitspanne **t** inkremental laufend erfassten Differenzdrücke Δ**p** werden über das Kabel **36** an einen Rechner übermittelt, mit dem das während der Zeitspanne **t** aus dem Hydranten **9** ausfliessende Wasservolumen **V** berechnet und protokolliert wird. Beispielsweise kann ein bestimmter Wert des Differenzdrucks Δ**p** ein elektrisches Signal von 4 mA erzeugen, was einem Volumenstrom **Q** von 1200 l/min entspricht.

Erfolgt während der Zeitspanne **t** ein Unterbruch der Wasserentnahme beginnt eine neue Zeitspanne **tₙ** der Datenerfassung. An der Messeinrichtung **3**, vorzugsweise am Rechner, lassen sich das aus dem Hydranten **9** ausfliessende Wasservolumen **V** für die einzelnen Zeitspannen **t-tₙ** erfassen, und/oder auch für einen Zeitraum, z.B. per Tag, zusammenfassen. Einstellen kann man auch, dass ein kurzzeitiger Unterbruch der Wasserentnahme am Hydranten **9**, z.B. bis unter 3 min, für die Datenerfassung keine neue Zeitspanne **tₙ** startet, sondern das nun zusätzlich aus dem Hydranten **9** ausfliessende Wasservolumen **V** auf die laufende Zeitspanne **t** aufsummiert wird.

Die Stromeinspeisung in das Kabel **36** kann vom Stromnetz oder von einer Batterie erfolgen, wobei zur Stromversorgung der Messeinrichtung **3** auch eine direkt im Gehäuse **35** liegende Batterie in Betracht kommt. Vorteilhaft kann das Kabel **36** zu einem Funkmodul führen, welches die Signale an den Rechner transferiert. Alternativ können die Signale auch in einem, z.B. im Gehäuse **35**, eingebauten Speicherbaustein erfasst werden und lassen sich dort dann berührungslos mit einem Lesegerät als Messergebnis für das aus dem Hydranten **9** entnommene Wasservolumen **V** auslesen.

## Patentansprüche

1. Messeinrichtung (**3**) zur Ermittlung des aus einem Hydranten (**9**) während einer Zeitspanne (**t**) ausfliessenden Wasservolumens (**V**), wobei:
a) der Hydrant (**9**) an ein unter Druck stehendes Leitungsnetz angeschlossen ist, **dadurch gekennzeichnet, dass**
b) die Messeinrichtung (**3**) fest im Hydranten (**9**) installiert ist und einen Strömungskörper (**30**) hat, an dem zwei zueinander beabstandete Druckmessstellen (**31**,**32**) vorhanden sind, deren erfasste Werte zur Beaufschlagung eines Differenzdruckmessmoduls (**34**) bestimmt sind;
c) der vom Differenzdruckmessmodul (**34**) zum Zeitpunkt (**t₁**) erfasste Differenzdruck (Δ**p**) ein Mass für den zu diesem Zeitpunkt (**t₁**) aus dem Hydranten (**9**) ausfliessenden Volumenstrom (**Q**) bildet; und
d) die vom Differenzdruckmessmodul (**34**) über die Zeitspanne (**t**) inkremental laufend erfassten Differenzdrücke (Δ**p**) als Signalfluss an einen Rechner übermittelt werden, mit dem das während der Zeitspanne (**t**) aus dem Hydranten (**9**) ausfliessende Wasservolumen (**V**) berechnet und protokolliert wird.

2. Messeinrichtung (**3**) nach Anspruch 1, **dadurch gekennzeichnet, dass** der Signalfluss in einem Speicherbaustein als Bestandteil der Messeinrichtung erfasst wird und sich dann dort über eine Kabelverbindung oder berührungslos vom Rechner als Messergebnis für das aus dem Hydranten (**9**) entnommene Wasservolumen (**V**) auslesen lässt.

3. Messeinrichtung (**3**) nach zumindest einem der Ansprüche 1 und 2, **dadurch gekennzeichnet, dass** der Strömungskörper (**30**) in den Strömungsquerschnitt im Inneren des Hydranten (**9**) hineinragt und von hydrodynamischer Form ist, welche im Prinzip das Querschnittsprofil einer Flugzeugtragfläche hat und mit seiner Profilnase (**300**) entgegen der im Hydranten (**9**) im Betriebsmodus auftretenden Wasserströmung positioniert ist, während die Profilhinterkante (**301**) des Strömungskörpers (**30**) stromabwärts liegt.

4. Messeinrichtung (**3**) nach zumindest einem der Ansprüche 1 bis 3, **dadurch gekennzeichnet, dass** jeweils eine der Druckmessstellen (**31**,**32**) am Strömungskörper (**30**) auf dessen Oberseite (**302**) und dessen Unterseite (**303**) liegt.

5. Messeinrichtung (**3**) nach Anspruch 4, **dadurch gekennzeichnet, dass** die beiden Druckmessstellen (**31**,**32**) jeweils nahe der Profilnase (**300**) des Strömungskörpers (**30**) liegen.

6. Messeinrichtung (**3**) nach zumindest einem der Ansprüche 1 bis 5, **dadurch gekennzeichnet, dass**
a) die Messeinrichtung (**3**) einen Zwischenring (**37**) aufweist; und
b) der Strömungskörper (**30**) in die lichte Weite des Zwischenrings (**37**) hineinragt.

7. Messeinrichtung (**3**) nach Anspruch 6, **dadurch gekennzeichnet, dass**
a) peripher am Zwischenring (**37**) ein Gehäuse (**35**) angeordnet ist, welches seitlich am Hydranten (**9**) herausragt; und
b) axial am Strömungskörper (**30**) ein Transferstück (**33**) ansetzt, wobei:
ba) der Übergang vom Strömungskörper (**30**) zum Transferstück (**33**) in einer als Durchgangsöffnung im Zwischenring (**37**) ausgebildeten Aufnahme (**370**) steckt, während der übrige Teil des Transferstücks (**33**) in einem im Gehäuse (**35**) vorhandenen Lager (**350**) ruht; und
bb) die an den Druckmessstellen (**31**,**32**) erfassten Werte durch das Transferstück (**33**) an das Differenzdruckmessmodul (**34**) geleitet werden.

8. Messeinrichtung (**3**) nach zumindest einem der Ansprüche 1 bis 7, **dadurch gekennzeichnet, dass** die Energieversorgung der Messeinrichtung (**3**) auf elektrischem Strom beruht, entweder über ein Kabel (**36**) vom Stromnetz oder von einer Batterie.

9. Messeinrichtung (**3**) nach Anspruch 8, **dadurch gekennzeichnet, dass** die vom Differenzdruckmessmodul (**34**) über die Zeitspanne (**t**) inkremental laufend erfassten Differenzdrücke (Δ**p**) als äquivalenter elektrischer Signalfluss:
a) entweder direkt über das Kabel (**36**) an den Rechner übermittelt werden; oder
b) das Kabel (**36**) zu einem Funkmodul führt, welches den Signalfluss an den Rechner transferiert.

10. Messeinrichtung (**3**) nach zumindest einem der Ansprüche 8 und 9, **dadurch gekennzeichnet, dass** die Batterie auswechselbar im Gehäuse (**35**) untergebracht ist.

11. Messeinrichtung (**3**) nach Anspruch 6, **dadurch gekennzeichnet, dass** der Zwischenring (**37**) mit dem darin positionierten Strömungskörper (**30**), installiert ist:
a) bei einem Hydranten (**9**) in Gestalt eines Überflurhydranten zwischen einem Steigrohr und einem Oberteil (**1**);
b) bei einem Hydranten (**9**) in Gestalt eines höhenverstellbaren Überflurhydranten zwischen einer in einem Steigrohrmantel (**21**) teleskopisch höhenverstellbar steckender Steigrohrverlängerung (**22** und einem Oberteil (**1**);
c) bei einem Hydranten (**9**) in Gestalt eines Unterflurhydranten zwischen einem Steigrohr und einem Unterflur-Aufsatz; und
d) bei einem Hydranten (**9**) in Gestalt eines höhenverstellbaren Unterflurhydranten zwischen einer in einem Steigrohrmantel (**21**) teleskopisch höhenverstellbar steckender Steigrohrverlängerung (**22**) und einem Unterflur-Aufsatz.

12. Messeinrichtung (**3**) nach zumindest einem der Ansprüche 1 bis 11, **dadurch gekennzeichnet, dass**
a) wenn während der Zeitspanne (**t**) ein Unterbruch der Wasserentnahme erfolgt, der Rechner eine neue Zeitspanne (**tₙ**) der Datenerfassung startet; und
b) am Rechner das aus dem Hydranten (**9**) ausfliessende Wasservolumen (**V**) für die einzelnen Zeitspannen (**t-tₙ**) und/oder auch für einen Zeitraum, z.B. per Tag, zusammengefasst, ablesbar ist.

13. Messeinrichtung (**3**) nach Anspruch 12, **dadurch gekennzeichnet, dass** am Rechner einstellbar ist, dass ein kurzzeitiger Unterbruch der Wasserentnahme am Hydranten (**9**), z.B. bis unter 3 min, für die Datenerfassung keine neue Zeitspanne (**tₙ**) startet, sondern das nun zusätzlich aus dem Hydranten (**9**) ausfliessende Wasservolumen (**V**) auf die laufende Zeitspanne (**t**) aufsummiert wird.
